# EUROPÄISCHE PATENTSCHRIFT

(11) **EP 1 250 679 B1**
(45) Veröffentlichungstag und Bekanntmachung des Hinweises auf die Patenterteilung: **03.03.2004**
(21) Anmeldenummer: 00993811.9
(22) Anmeldetag: 15.11.2000
(51) Int. Cl.: G06K 17/00, G06K 13/00

(54) **VORRICHTUNG ZUM BEARBEITEN VON DATENTRÄGERKARTEN**
DEVICE FOR PROCESSING DATA CARRIER CARDS
DISPOSITIF DE TRAITEMENT DE CARTES PORTEUSES DE DONNEES

(30) Priorität: 24.01.2000 DE 10002837
(43) Veröffentlichungstag der Anmeldung: 23.10.2002
(73) Patentinhaber: Wincor Nixdorf International GmbH, 33106 Paderborn (DE)
(72) Erfinder: TEWES, Udo, 32547 Bad Oeynhausen (DE)
(74) Vertreter: Schaumburg, Thoenes, Thurn Patentanwälte
(86) Internationale Anmeldenummer: PCT/EP2000/011314
(87) Internationale Veröffentlichungsnummer: WO 2001/055959

(56) Entgegenhaltungen:
- EP-A- 0 784 290
- EP-A- 0 911 751

## Beschreibung

Die Erfindung betrifft eine Vorrichtung zum Bearbeiten von Datenträgerkarten, umfassend eine Transportvorrichtung mit einem Ein-/Ausgabeabschnitt zum Einziehen und Ausgeben einer Datenträgerkarte, eine Schreib-/Lesevorrichtung zum Datenaustausch mit der Datenträgerkarte und eine Steuervorrichtung zum Steuern der Transportvorrichtung und der Schreib-/Lesevorrichtung, wobei Mittel vorgesehen sind, um Daten auf einer ersten Karte unter Verwendung der auf einer zweiten Karte gespeicherten Daten zu speichern.

Datenträgerkarten mit Magnetstreifen und/oder integrierten Chips finden eine zunehmende Verbreitung als Ausweiskarten oder Zahlungsmittel und dergleichen. In vielen Fällen sind die Karten personengebunden. Ihre Ausgabe unterliegt gewissen Sicherheitsvorschriften und ist daher entsprechend aufwendig und kompliziert.

Es sind bereits Kartenspender bekannt, die einen Kartenspeicher zur Aufnahme eines Vorrates an standardisierten Karten enthalten, die jedoch vor der Ausgabe in der Regel nicht bearbeitet werden.

Ferner ist aus DE 196 34 688 A1 eine Vorrichtung bekannt, welche die Bearbeitung von Karten, das heißt das Lesen der auf der Karte eingespeicherten Daten und auch das Einspeichern von Daten ermöglicht und ein Kartenmagazin hat, in dem entgegengenommene Karten abgelegt und aus dem sie auch wieder ausgegeben werden können. Damit können Karten in einem Kreislauf individuell bearbeitet, gespeichert und nach einer eventuellen zweiten Bearbeitung wieder ausgegeben werden, wobei der Kreislauf der Karten aber nach dem first in/first out-Prinzip erfolgt. Eine Karte kann also erst wieder ausgegeben werden, nachdem sie das gesamte Kartenmagazin durchlaufen hat.

Aus der EP-A-0 911 751 ist bereits eine Vorrichtung der eingangs genannten Art bekannt, die zum Umbuchen von Daten von einer Chip-Karte auf eine andere dient. Dabei sind zwei Kartenschächte auf einer Schwinge angeordnet, so daß die Kartenschächte wahlweise mit dem Ein-/Ausgabeabschnitt der Vorrichtung in Flucht gebracht werden können. Jedem Kartenschacht ist ein Lesekopf zugeordnet. Zunächst werden die beiden Karten, in die Kartenschächte eingeführt, indem diese nacheinander mit dem Ein-/Ausgabeabschnitt des Gerätes in Flucht gebracht werden. Dann werden die Karten von dem jeweiligen Lesekopf kontaktiert, so daß Daten von einer Karte auf die andere umgeschrieben werden können. Der apparative Aufwand für diese Lösung ist relativ groß.

Aus der EP-A-0 784 290 ist ferner ein Gerät bekannt, das es ebenfalls ermöglicht, Daten von einer Magnetstreifenkarte auf eine Smart-Card zu überschreiben. Hierzu sind zwei getrennte Kartenschächte vorgesehen. Einer dieser Schächte dient zur Eingabe einer Magnetstreifenkarte, die gelesen und anschließend in einem Speicher abgelegt wird. Die gelesenen Daten werden gespeichert. Der zweite Schacht dient zur Ausgabe der Smart-Card, die aus einem Speicher entnommen und in den zweiten Kartenschacht eingeführt wird. Dort werden die von der ersten Karte gelesenen Daten eingespeichert. Anschließend kann die Karte an einen Kunden ausgegeben werden. Auch hier ist der apparative Aufwand relativ groß. Der Verwendungszweck der Vorrichtung ist eingeschränkt.

Der Erfindung liegt die Aufgabe zugrunde, eine Vorrichtung der eingangs genannten Art so auszubilden, daß die Einsatzmöglichkeiten für Datenträgerkarten der oben genannten Art erweitert werden können.

Diese Aufgabe wird erfindungsgemäß dadurch gelöst, daß die Schreib-/Lesevorrichtung in dem Ein-/Ausgabeabschnitt angeordnet ist, daß die Transportvorrichtung einen sich an den Ein-/Ausgabeabschnitt anschließenden Kartenzwischenspeicher hat und daß die Speicherung von Daten auf der ersten Karte erfolgt, während die zweite Karte im Kartenszwischenspeicher gehalten wird.

Die Bearbeitung von Datenträgerkarten kann also beispielsweise so erfolgen, daß zunächst die zweite Karte in die Vorrichtung eingeführt und die in ihr gespeicherten Daten gelesen werden. Anschließend wird die erste Karte eingeführt, in welche dann Daten unter Verwendung der von der zweiten Karte gelesenen Daten eingeschrieben werden. Beispielsweise kann die zweite Karte eine Ausweiskarte sein, die zur Ausgabe neuer Karten berechtigt.

Die Ausbildung kann aber auch so getroffen sein, daß Daten direkt von einer Karte auf eine andere übertragen, beispielsweise umgebucht werden. So könnte ein Kunde bestimmte Dienste in Anspruch nehmen, wobei seine Karte jeweils belastet wird. Anschließend werden die aufgelaufenen Beträge auf eine Karte eines Verkäufers oder beispielsweise Kellners gebucht oder von einer anderen Karte abgebucht.

Die erfindungsgemäße Vorrichtung kann auch dazu benutzt werden, Daten von einer Karte der einen Speichertechnologie auf eine Karte mit einer anderen Speichertechnologie umzubuchen, wobei die Schreib-/Lesevorrichtung in diesem Falle für die Bearbeitung von Karten mit unterschiedlichen Speichermedien ausgebildet ist.

Eine wesentliche Erweiterung der Nutzungsmöglichkeiten der erfindungsgemäßen Vorrichtung ergibt sich dann, wenn der Transportvorrichtung ein Kartenmagazin zugeordnet ist, wobei der Kartenzwischenspeicher mit mindestens zwei getrennten Transportbahnen versehen ist, die einzeln und wahlweise mit dem Ein-/Ausgabeabschnitt verbindbar sind und von denen mindestens eine wahlweise mit dem Kartenmagazin verbindbar ist. Bei dieser Ausführungsform können Karten dem Kartenmagazin entnommen und beispielsweise unter Zuhilfenahme von Daten aktualisiert oder personalisiert werden, die von einer anderen Datenträgerkarte abgelesen wurden, die dann in dem Kartenzwischenspeicher gehalten wird, solange sie benötigt wird. Die dem Kartenmagazin entnommenen Karten können dabei gegebenenfalls auch schon mit einem bestimmten feststehenden Datensatz versehen sein. Eine weitere Nutzungsmöglichkeit ergibt sich, wenn das Kartenmagazin eine Mehrzahl von Fächern zum Speichern je mindestens einer Datenträgerkarte hat, wobei die Transportvorrichtung und das Kartenmagazin derart verstellbar sind, daß ein ausgewähltes Fach mit einer Transportbahn des Kartenzwischenspeichers fluchtet, und wobei Übergabemittel vorgesehen sind, um eine Datenträgerkarte von der Transportvorrichtung in das jeweilige Fach und/oder aus dem Fach an die Transportvorrichtung zu übergeben. In diesem Falle kann beispielsweise ein bestimmter Vorrat an Karten in der oben beschriebenen Weise personalisiert oder aktualisiert und anschließend in dem Kartenmagazin abgelegt werden.

Die Übergabemittel können dabei mindestens einen Schieber haben, um eine Datenträgerkarte in das jeweilige Fach hinein oder aus diesem heraus zu schieben. Um Fehler beim Einführen der Karte in die Transportvorrichtung korrigieren zu können, kann die Transportvorrichtung mit einer Kartenwendestation zum Drehen einer Karte um die Querachse und/oder die Längsachse und/oder die senkrecht zur Kartenebene gerichtete Hochachse versehen sein. Eine raumsparende Anordnung läßt sich dabei dadurch erreichen, daß der Kartenzwischenspeicher als Wendestation ausgebildet wird.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:
- Fig. 1: eine schematische Seitenansicht der erfindungsgemäßen Kartenbearbeitungsvorrichtung in einer ersten Stellung des Kartenzwischenspeichers und
- Fig. 2: eine der Fig. 1 entsprechende Ansicht in einer zweiten Stellung des Kartenzwischenspeichers.

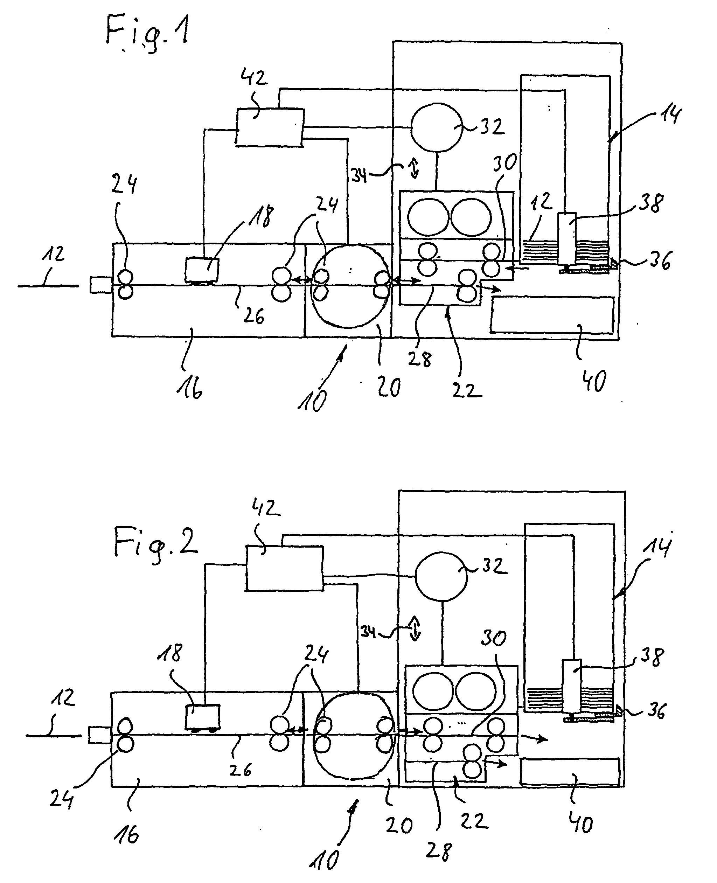

Die in den Fig. 1 und 2 schematisch dargestellte Vorrichtung umfaßt eine allgemein mit 10 bezeichnete Transportvorrichtung für Datenträgerkarten 12, die entweder von außen in die Transportvorrichtung eingegeben werden oder in einem Kartenmagazin 14 aufbewahrt werden.

Die Transportvorrichtung 10 umfaßt einen Ein-/Ausgabeabschnitt 16, innerhalb dessen ein Schreib-/Lesekopf 18 angeordnet ist, eine Kartenwendestation 20 und einen Kartenzwischenspeicher 22. Transportrollenpaare 24 definieren eine Transportbahn 26 in dem Ein-/Ausgabeabschnitt 16 sowie der Wendestation 20 und Bahnabschnitte 28, 30 in dem Kartenzwischenspeicher 22.

Der Schreib-/Lesekopf ist zum Lesen und Beschreiben von Magnetstreifen und/oder zur Datenverbindung mit einer Chipkarte mit integriertem Chip durch Kontaktieren mit deren Kontaktelementen und/oder kontaktlos z.B. durch kapazitive, induktive oder RF-Kopplung ausgebildet, so daß Karten mit unterschiedlicher Speicher- und/oder Verbindungstechnologie bearbeitet werden können.

In der Kartenwendestation 20 kann die Karte im dargestellten Beispiel um ihre Querachse gedreht werden. Es ist ebenso denkbar, die Wendestation so auszuführen, daß die Karte alternativ oder zusätzlich dazu um ihre Längsachse und ihre senkrecht zur Kartenebene gerichtete Hochachse drehbar ist, um die Karte relativ zum Schreib-/Lesekopf 18 korrekt zu positionieren, wenn sie von dem Benutzer falsch in den Ein-/Ausgabeabschnitt 16 eingeführt wurde. Die Kartenwendestation 20 kann aber auch in den Kartenzwischenspeicher integriert werden bzw. dieser kann als Wendestation ausgeführt werden.

Der Kartenzwischenspeicher 22 ist als Ganzes mittels eines schematisch angedeuteten Antriebes 32 in Richtung des Doppelpfeiles 34 zwischen der in der Fig. 1 dargestellten Stellung, in welcher der untere Bahnabschnitt 28 mit der Übergabestelle zur Wendestation 20 fluchtet und der obere Bahnabschnitt 30 mit einer Ausgabestelle am Kartenmagazin 14 fluchtet, und einer in Fig. 2 dargestellten unteren Stellung verstellbar, in welcher der obere Bahnabschnitt 30 mit der Übergabestellung zur Wendestation 20 fluchtet.

Die Karten 12 können aus dem Kartenmagazin 14 mit Hilfe eines Schiebers 36 entnommen werden, der durch einen Motor 38 angetrieben wird.

Unterhalb des Kartenmagazins 14 befindet sich ein Sammelfach 40.

Die einzelnen Funktionen der soweit beschriebenen Vorrichtung können von einer Steuereinheit 42 gesteuert werden, wie dies in den Figuren angedeutet ist.

Die Ausbildung des Kartenzwischenspeichers oder Übergabeabschnittes 22 mit zwei Transportbahnabschnitten 28, 30 bietet die Möglichkeit einer Zwischenspeicherung einer Karte, die nicht in dem Kartenmagazin abgelegt ist, sondern von außen eingeführt wird. Beispielsweise kann zunächst eine Karte, von der Daten auf eine andere Karte umgeschrieben werden sollen oder deren Daten für das Beschreiben einer anderen Karte benötigt werden, über den Eingabe-/Ausgabeabschnitt 16 in den Bahnabschnitt 28 des Kartenzwischenspeichers 22 eingeführt werden, wobei sich dieser in der in der Fig. 1 dargestellten Stellung befindet. In derselben Stellung des Kartenzwischenspeichers 22 wird mittels des Schiebers 36 eine Karte 12 aus dem Kartenmagazin 14 entnommen und in den Bahnabschnitt 30 eingeschoben. Dann wird der Kartenzwischenspeicher 22 in die in der Fig. 2 dargestellte Stellung abgesenkt, so daß die entnommene Karte über die Wendestation 20 in den Ein-/Ausgabeabschnitt 16 transportiert werden kann. Während dieser Zeit verbleibt die erstgenannte Karte in dem Bahnabschnitt 28 des Kartenzwischenspeichers 22. Eine solche Karte kann beispielsweise eine Ausweiskarte sein, die zur Ausgabe neuer Karten berechtigt oder sie kann auch beispielsweise ein Guthaben enthalten, von dem ein Teilguthaben abgebucht und auf eine dem Kartenmagazin 14 entnommene Karte umgespeichert wird.

Andererseits können auch beide Karten von außen in den Eingabe-/Ausgabeabschnitt 16 eingeführt werden, wobei die zuerst eingeführte Karte dann in dem Kartenzwischenspeicher 22 gespeichert wird. Auch hier lassen sich die gleichen Funktionen ausführen, die oben bereits beschrieben wurden.

Grundsätzlich besteht auch die Möglichkeit, das Kartenmagazin 14 nicht nur als Kartenspender auszubilden sondern es mit Fächern zu versehen, in denen die Karten mit Hilfe des in Richtung des Doppelpfeiles 34 auf und ab verstellbaren Kartenzwischenspeichers 22 gezielt abgelegt werden können, so daß die Karten auch wieder auffindbar sind und beispielsweise mehrfach eingezogen und wieder ausgegeben werden können. Ist eine neuerliche Ausgabe von Karten nicht beabsichtigt, genügt in der Regel das Sammelfach 40, in dem Karten aus den Bahnabschnitten 28, 30 des Kartenzwischenspeichers 22 abgelegt werden können, wie dies durch die Pfeile in den Figuren 1 und 2 dargestellt ist.

Die erfindungsgemäße Vorrichtung kann ganz allgemein für Abrechnungssysteme verwendet werden, bei denen über ein SB-Terminal eine personalisierte Karte ausgegeben wird, auf diese Karte Leistungen gebucht werden und diese Karte dann später zur endgültigen Abrechnung wieder in das Terminal zurückgegeben wird. Ein weiterer Anwendungsfall für eine derartige Lösung wäre zum Beispiel die zeitabhängige Nutzung von Computern (zum Beispiel im Internet-Café) oder eine Kostenabrechnung in einer Gastwirtschaft (elektronischer Bierdeckel). Ein weiterer Anwendungsfall wäre beispielsweise in einem Hotel ein automatisches Selbstbedienungs-Check-in/Check-out-System, bei welchem die Zutrittskarten für ein Zimmer an einem Terminal ausgegeben bzw. wieder eingezogen oder abgelegt werden. Die den einzelnen Zimmern zugeordneten Karten enthalten Festdaten wie beispielsweise eine Schlüsselkombination zum Öffnen des Türschlosses. Andererseits können die Daten für den jeweiligen Gast personalisiert werden, so daß über diese Karte auch am Ende die Abrechnung erfolgt.

Man erkennt, daß die erfindungsgemäße Lösung eine Fülle von Anwendungsmöglichkeiten bietet, bei denen Daten zwischen einer ersten Karte und einer zweiten Karte übertragen oder Daten in den Speicher einer Karte eingeschrieben werden sollen unter Verwendung von auf einer anderen Karte gespeicherten Daten. Alle diese Funktionen lassen sich in einfacher und rationeller Weise durch die Kombination eines herkömmlichen Kartenschreib-/Lesemoduls mit einem Kartenmagazin und dem beschriebenen Kartenzwischenspeicher realisieren.

## Patentansprüche

1. Vorrichtung zum Bearbeiten von Datenträgerkarten, umfassend eine Transportvorrichtung (10) mit einem Ein-/Ausgabeabschnitt (16) zum Einziehen und Ausgeben einer Datenträgerkarte, eine Schreib-/Lesevorrichtung (18) zum Datenaustausch mit der Datenträgerkarte (12) und eine Steuervorrichtung (42) zum Steuern der Transportvorrichtung (10) und der Schreib-/Lesevorrichtung (18), wobei Mittel (42, 18) vorgesehen sind, um Daten auf einer ersten Karte unter Verwendung der auf einer zweiten Karte gespeicherten Daten zu speichern, **dadurch gekennzeichnet, daß** die Schreib-/Lesevorrichtung (18) in dem Ein-/Ausgabeabschnitt (16) angeordnet ist, daß die Transportvorrichtung (10) einen sich an den Ein-/Ausgabeabschnitt (16) anschließenden Kartenzwischenspeicher (22) hat und daß die Speicherung von Daten auf der ersten Karte erfolgt, während die zweite Karte im Kartenzwischenspeicher (22) gehalten wird.

2. Vorrichtung nach Anspruch 1, **dadurch gekennzeichnet, daß** sie Mittel (42, 18) hat, um Daten von einer ersten Karte auf eine zweite Karte zu übertragen, während eine der Karten in dem Kartenzwischenspeicher (22) gehalten wird.

3. Vorrichtung nach Anspruch 1 oder 2, **dadurch gekennzeichnet, daß** die Schreib-/Lesevorrichtung (18) für die Bearbeitung von Datenträgerkarten (12) mit unterschiedlichen Speichermedien und/oder Datenverbindungstechniken ausgebildet ist.

4. Vorrichtung nach einem der Ansprüche 1 bis 3, **dadurch gekennzeichnet, daß** der Kartenzwischenspeicher (22) mit mindestens zwei getrennten Transportbahnen (28, 30) versehen ist, die einzeln und wahlweise mit dem Ein-/Ausgabeabschnitt (16) verbindbar sind.

5. Vorrichtung nach Anspruch 4, **dadurch gekennzeichnet, daß** der Transportvorrichtung (10) ein Kartenmagazin (14) zugeordnet ist und daß mindestens eine der Transportbahnen (28, 30) wahlweise mit dem Kartenmagazin (14) verbindbar ist.

6. Vorrichtung nach Anspruch 5, **dadurch gekennzeichnet, daß** das Kartenmagazin eine Mehrzahl von Fächern zum Speichern je mindestens einer Datenträgerkarte hat, daß die Transportvorrichtung (10) und der Kartenzwischenspeicher (22) relativ zueinander derart verstellbar sind, daß ein ausgewähltes Fach mit einer Transportbahn (30) des Kartenzwischenspeichers (22) fluchtet, und daß Übergabemittel vorgesehen sind, um eine Datenträgerkarte von der Transportvorrichtung (10) in das Fach und/oder aus dem Fach an die Transportvorrichtung (10) zu übergeben.

7. Vorrichtung nach Anspruch 6, **dadurch gekennzeichnet, daß** die Übergabemittel mindesten einen Schieber (36) haben, um eine Datenträgerkarte in das jeweilige Fach hinein und/oder aus diesem heraus zu schieben.

8. Vorrichtung nach einem der Ansprüche 1 bis 7, **dadurch gekennzeichnet, daß** die Transportvorrichtung (10) mit einem Sammelfach (40) koppelbar ist.

9. Vorrichtung nach einem der Ansprüche 1 bis 8, **dadurch gekennzeichnet, daß** die Transportvorrichtung (10) eine Kartenwendestation (20) zum Drehen einer Karte um die Querachse und/oder die Längsachse und/oder die senkrecht zur Kartenebene gerichtete Hochachse hat.

10. Vorrichtung nach Anspruch 9, **dadurch gekennzeichnet, daß** der Kartenzwischenspeicher (22) als Wendestation ausgebildet ist.

## Revendications

1. Dispositif de traitement de cartes de support de données, comportant :
un dispositif de transport (10) doté d'une section d'entrée et de sortie (16) destinée à insérer et délivrer une carte de support de données,
un dispositif de lecture et d'écriture (18) destiné à échanger des données avec la carte de support de données (12), et
un dispositif de commande (42) destiné à commander le dispositif de transport (10) et le dispositif de lecture et d'écriture (18),
des moyens (42, 18) étant en outre prévus pour mémoriser des données d'une première carte en utilisant des données mémorisées sur une deuxième carte, **caractérisé en ce que** :
le dispositif de lecture et d'écriture (18) est agencé dans la section d'entrée et de sortie (16),
le dispositif de transport (10) possède une section de stockage intermédiaire de carte (22) se raccordant à la section d'entrée et de sortie (16), et
la mémorisation de données sur la première carte est effectuée lorsque la deuxième carte est maintenue dans la section de stockage intermédiaire de carte (22).

2. Dispositif selon la revendication 1, **caractérisé en ce qu'**il comporte des moyens (42, 18) pour transférer des données d'une première carte sur une deuxième carte pendant que l'une des cartes est maintenue dans la section de stockage intermédiaire de carte (22).

3. Dispositif selon la revendication 1 ou 2, **caractérisé en ce que** le dispositif de lecture et d'écriture (18) est conformé pour traiter des cartes de support de données (12) avec différents supports de mémorisation et/ou différentes techniques de liaison de données.

4. Dispositif selon l'une des revendications 1 à 3, **caractérisé en ce que** la section de stockage intermédiaire de carte (22) est dotée d'au moins deux voies de transport séparées (28, 30) qui peuvent être reliées individuellement et sélectivement à la section d'entrée et de sortie (16).

5. Dispositif selon la revendication 4, **caractérisé en ce qu'**un magasin de cartes (14) est associé au dispositif de transport (10), et **en ce qu'**au moins une des voies de transport (28, 30) peut être reliée sélectivement au magasin de cartes (14).

6. Dispositif selon la revendication 5, **caractérisé en ce que** :
le magasin de cartes comporte une pluralité de compartiments destinés à stocker chacun au moins une carte de support de données,
le dispositif de transport (10) et la section de stockage intermédiaire de carte (22) peuvent être réglés l'un par rapport à l'autre de telle sorte qu'un compartiment sélectionné soit au niveau d'une voie de transport (30) de la section de stockage intermédiaire de carte (22), et
des moyens de transfert sont prévus pour transférer une carte de support de données du dispositif de transport (10) dans le compartiment, et/ou du compartiment au dispositif de transport (10).

7. Dispositif selon la revendication 6, **caractérisé en ce que** les moyens de transfert comportent au moins un coulisseau (36) en vue d'insérer une carte de support de données dans le compartiment respectif, ou de la faire sortir de celui-ci.

8. Dispositif selon l'une des revendications 1 à 7, **caractérisé en ce que** le dispositif de transport (10) peut être couplé à un compartiment de collecte (40).

9. Dispositif selon l'une des revendications 1 à 8, **caractérisé en ce que** le dispositif de transport (10) comporte une station de retournement de carte (20) destinée à faire tourner une carte autour de l'axe transversal et/ou de l'axe longitudinal et/ou de l'axe vertical perpendiculaire au plan de la carte.

10. Dispositif selon la revendication 9, **caractérisé en ce que** la section de stockage intermédiaire de carte (22) est conformée en station de retournement.

## Claims

1. A device for processing data carrier cards, comprising a transport device (10) with an input/output section (16) for drawing in and dispensing a data carrier card, a write/read device (18) for data exchange with the data carrier card (12) and a control device (42) for controlling the transport device (10) and the write/read device (18), means (42, 18) being provided to store data onto a first card by using the data stored on a second card, **characterized in that** the write/read device (18) is provided in the input/output section (16), **in that** the transport device (10) comprises an intermediate card storage (22) following the input/output section (16), and **in that** the storage of data on the first card is carried out while the second card is held in the intermediate card storage (22).

2. The device according to claim 1, **characterized in that** it has means (42, 18) for transmitting data from a first card to a second card, while one of the cards is held in the intermediate card storage (22).

3. The device according to claim 1 or 2, **characterized in that** the write/read device (18) is constructed for the processing of data carrier cards (12) using different storage media and/or data connecting techniques.

4. The device according to one of the claims 1 to 3, **characterized in that** the intermediate card storage (22) is provided with at least two separate transport paths (28, 30) which are individually and selectively connectable to the input/output section (16).

5. The device according to claim 4, **characterized in that** a card magazine (14) is allocated to the transport device (10) and **in that** at least one of the transport paths (28, 30) is selectively connectable to the card magazine (14).

6. The device according to claim 5, **characterized in that** the card magazine has a plurality of compartments for storing at least one data carrier card each, **in that** the transport device (10) and the intermediate card storage (22) are adjustable relative to one another such that a selected compartment aligns with a transport path (30) of the intermediate card storage (22) and **in that** transfer means are provided for transferring a data carrier card from the transport device (10) into the compartment and/or out of the compartment to the transport device (10).

7. The device according to claim 6, **characterized in that** the transfer means have at least a slide (36) to push a data carrier card into the respective compartment and/or out of that compartment.

8. The device according to one of the claims 1 to 7, **characterized in that** the transport device (10) can be coupled to a collecting compartment (40).

9. The device according to one of the claims 1 to 8, **characterized in that** the transport device (10) has a card turning station (20) for turning a card about its lateral axis and/or its longitudinal axis and/or the vertical axis which is perpendicular to the plane of the card.

10. Device according to claim 9, **characterized in that** the intermediate card storage (22) is constructed as a turning station.
